# EUROPEAN PATENT SPECIFICATION

(11) **EP 3 793 317 B1**
(45) Date of publication and mention of the grant of the patent: **09.07.2025**
(21) Application number: 18918021.9
(22) Date of filing: 10.05.2018
(51) Int. Cl.: H04W 12/041, H04W 12/0431, H04W 76/10, H04W 76/30, H04W 92/10

(54) **KEY UPDATE METHOD, DEVICE, AND STORAGE MEDIUM**
SCHLÜSSELAKTUALISIERUNGSVERFAHREN, VORRICHTUNG UND SPEICHERMEDIUM
PROCÉDÉ DE MISE À JOUR DE CLÉ, DISPOSITIF, ET SUPPORT DE STOCKAGE

(43) Date of publication of application: 17.03.2021
(73) Proprietor: HUAWEI TECHNOLOGIES CO., LTD., Shenzhen, Guangdong 518129 (CN)
(72) Inventor: ZHU, Xiaosong, Shenzhen, Guangdong 518129 (CN); ROLLINGER, Odile, Shenzhen, Guangdong 518129 (CN); YU, Yinghui, Shenzhen, Guangdong 518129 (CN); WU, Yiling, Shenzhen, Guangdong 518129 (CN)
(74) Representative: MERH-IP Matias Erny Reichl Hoffmann Patentanwälte PartG mbB
(86) International application number: PCT/CN2018/086402
(87) International publication number: WO 2019/213925

(56) References cited:
- CN-A- 101 483 865
- CN-A- 102 595 390
- CN-A- 104 936 175
- CN-A- 105 850 176
- US-A1- 2015 017 976
- HUAWEI ET AL: "Introduction of a new release cause 'key change' in RRCConnectionRelease", vol. RAN WG2, no. Busan, Korea; 20180521 - 20180525, 11 May 2018 (2018-05-11), XP051464973, Retrieved from the Internet <URL:http://www.3gpp.org/ftp/tsg%5Fran/WG2%5FRL2/TSGR2%5F102/Docs> [retrieved on 20180511]
- ERICSSON: "Security key update during handover", vol. RAN WG2, no. Sanya, P.R. of China; 20180416 - 20180420, 5 April 2018 (2018-04-05), pages 1 - 10, XP051415157, Retrieved from the Internet <URL:http://www.3gpp.org/ftp/tsg%5Fran/WG2%5FRL2/TSGR2%5F101bis/Docs/> [retrieved on 20180405]

## Description

### TECHNICAL FIELD

This application relates to communications technologies, and in particular, to a key update method, a device, and a storage medium.

### BACKGROUND

In a security mechanism of a narrowband internet of things (NarrowBand Internet of Things, NB-IoT), the following provides protection for security of an air interface in a UP mode: Encryption and integrity protection are performed on a non-access stratum (Non Access Stratum, NAS); encryption and integrity protection are performed on a control plane of an access stratum (Access Stratum, AS), and encryption is performed on a user plane of the access stratum. The encryption and the integrity protection on the AS are implemented in the packet data convergence protocol (Packet Data Convergence Protocol, PDCP) through radio resource control (Radio Resource Control, RRC) negotiation and key generation.

In the NB-IoT system, when a key of a base station is updated, the current system can only release a terminal first. When downlink data arrives, the terminal is paged for access, or when uplink data arrives, the terminal actively initiates access. The key is updated by configuring a new key in an access process. A specific process is as follows: The base station sends an RRC connection release message to user equipment (user equipment, UE), and the UE releases an RRC connection based on the connection release message. When receiving a paging message sent by the base station or when there is data that needs to be uploaded, the UE sends a random access preamble to the base station, to trigger a random access process. In the random access process, the UE receives an RRC security configuration command sent by the base station, where the RRC security configuration command carries the new key configured by the base station. The UE returns an RRC security configuration complete message to the base station based on the updated key. In a process of continuing to complete an RRC connection, the UE performs data encryption, decryption, and integrity protection based on the updated key.

However, in the foregoing solution, the UE releases the connection, and waits until the UE is paged or there is data to be uploaded, to negotiate the new key in the random access process. In a key update process, the UE is disconnected for a relatively long time, and because the key needs to be updated, a large quantity of radio resources on a network side may be wasted for paging the UE.

CN 104 936 175 provides a method for updating a key in a dual connection communication environment. The method comprises sending a first RRC connection reconfiguration message to a UE to notify the UE to execute key updating and to release the secondary cell group (SCG) associated with a secondary eNB (SeNB) when the key updating is carried out.

### SUMMARY

The invention is defined by the appended claims.

Embodiments of this application provide a key update method, a device, and a storage medium, to resolve a problem, in a current key update method, that UE is disconnected for a relatively long time, and a relatively large quantity of radio resources on a network side may be wasted for paging. The technical improvement is achieved by the solution provided in accordance with the claims.

The following aspects are useful for understanding the application.

A first aspect of this application provides a key update method, where the method includes:
receiving a first message from a network device, where the first message is used for releasing an RRC connection, the first message includes a first indication, and the first indication is used to indicate that a key is to be updated;
releasing the RRC connection; and
initiating access to the network device in response to the first indication to obtain a new security configuration, where the security configuration is used for obtaining a new key.

In a specific implementation, the first indication is a first cause value, the first message includes a release cause information element, and a value of the release cause information element is the first cause value.

In a specific implementation, the initiating access to the network device to obtain a new security configuration includes:
initiating the access to the network device to establish an RRC connection to the network device; and
receiving a second message from the network device, where the second message includes the new security configuration.

In a specific implementation, the first message further includes indication information used to indicate whether there is downlink data.

In a specific implementation, the method further includes:
indicating, to the network device when initiating the access to the network device, that an access cause is that the key is to be updated.

In a specific implementation, the first message is an RRC connection release message.

A second aspect of this application provides a key update method, where the method includes:
sending a first message to UE, where the first message is used for releasing an RRC connection, the first message includes a first indication, and the first indication is used to indicate that a key is to be updated; and
accepting access initiated by the UE in response to the first indication, to send a security configuration to the UE, where the security configuration is used for obtaining a new key.

In a specific implementation, the first indication is a first cause value, the first message includes a release cause information element, and a value of the release cause information element is the first cause value.

In a specific implementation, the accepting access initiated by the UE in response to the first indication, to send a security configuration to the UE includes:
receiving information that is of the UE and that is used for the access, and establishing an RRC connection to the UE; and
sending a second message to the UE, where the second message includes the security configuration.

In a specific implementation, the first message further includes indication information used to indicate whether there is downlink data.

In a specific implementation, the method further includes:
receiving an access cause of the access, where the access cause is that the key is to be updated.

In a specific implementation, the first message is an RRC connection release message.

A third aspect of this application provides a key update method, including:
receiving a first message from a network device, where the first message is used for releasing an RRC connection, and the first message includes a security configuration;
releasing the RRC connection; and
obtaining a new key based on the security configuration.

In a specific implementation, the security configuration includes a next hop chaining count NCC value and a security algorithm.

In a specific implementation, the obtaining a new key based on the security configuration includes:
regenerating a base station eNB key KeNB* based on the NCC value and an access security management entity key K_{ASME}; and
generating, based on the eNB key KeNB* and/or the security algorithm, an RRC integrity protection key related to an integrity algorithm.

In a specific implementation, the method further includes:
generating, based on the eNB key KeNB* and/or the security algorithm, an RRC encryption key and a data encryption key that are related to an encryption algorithm.

In a specific implementation, the first message further includes indication information used to indicate whether there is downlink data.

In a specific implementation, the first message is an RRC connection release message.

In a specific implementation, the method further includes:
sending a connection message to the network device based on the new key.

In a specific implementation, the method further includes:
indicating, to the network device in a connection process, that a connection cause is that a key is to be updated.

A fourth aspect of this application provides a key update method, where the method includes:
sending a first message to UE, where the first message is used for releasing an RRC connection, the first message includes a security configuration, and the security configuration is used for obtaining a new key; and
receiving a connection message sent by the UE based on the new key.

In a specific implementation, the security configuration includes an NCC value and/or a security algorithm.

In a specific implementation, the first message further includes indication information used to indicate whether there is downlink data.

In a specific implementation, the method further includes:
receiving an indication that the UE indicates, to the network device in a connection process, that an access cause is that a key is to be updated.

In a specific implementation, the first message is an RRC connection release message.

A fifth aspect of this application provides a key update method, where the method includes:
receiving a first message that is sent by a network device and that is used in a non-handover condition, where the first message is used for RRC connection reconfiguration, the first message includes a security configuration, and the security configuration is used for obtaining a new key;
obtaining the new key based on the security configuration; and
sending a second message to the network device based on the new key, where the second message is used to indicate that the connection reconfiguration is completed.

In a specific implementation, the security configuration includes a next hop chaining count NCC value and a security algorithm.

In a specific implementation, the obtaining the new key based on the security configuration includes:
regenerating a base station eNB key KeNB* based on the NCC value and an access security management entity key K_{ASME}; and
generating, based on the eNB key KeNB* and/or the security algorithm, an RRC integrity protection key related to an integrity algorithm.

In a specific implementation, the method further includes:
generating, based on the eNB key KeNB* and/or the security algorithm, an RRC encryption key and a data encryption key that are related to an encryption algorithm.

In a specific implementation, the first message is an RRC connection reconfiguration message, and the second message is an RRC connection reconfiguration complete message.

A sixth aspect of this application provides a key update method, where the method includes:
sending a first message used in a non-handover condition to UE, where the first message is used for RRC connection reconfiguration, and the first message includes a security configuration; and
receiving a second message returned by the UE based on a new key, where the second message is used to indicate that the connection reconfiguration is completed.

In a specific implementation, the security configuration includes a next hop chaining count NCC value and a security algorithm.

In a specific implementation, the first message is an RRC connection reconfiguration message, and the second message is an RRC connection reconfiguration complete message.

A seventh aspect of this application provides user equipment, including:
a receiver, configured to receive a first message from a network device, where the first message is used for releasing an RRC connection, the first message includes a first indication, and the first indication is used to indicate that a key is to be updated;
a processor, configured to release the RRC connection; and
a transmitter, configured to initiate access to the network device in response to the first indication to obtain a new security configuration, where the security configuration is used for obtaining a new key.

Optionally, the first indication is a first cause value, the first message includes a release cause information element, and a value of the release cause information element is the first cause value.

Optionally, the transmitter is specifically configured to initiate the access to the network device to establish an RRC connection to the network device;
the receiver is further configured to receive a second message from the network device, where the second message is used to configure a key, and the second message includes the security configuration.

Optionally, the first message further includes indication information used to indicate whether there is downlink data.

Optionally, the sending module is further configured to indicate, to the network device when initiating the access to the network device, that an access cause is that the key is to be updated.

Optionally, the first message is an RRC connection release message.

An eighth aspect of this application provides a network device, including:
a transmitter, configured to send a first message to user equipment UE, where the first message is used for releasing an RRC connection, the first message includes a first indication, and the first indication is used to indicate that a key is to be updated; and
a receiver, configured to accept access initiated by the UE in response to the first indication, to send a security configuration to the UE, where the security configuration is used for obtaining a new key.

Optionally, the first indication is a first cause value, the first message includes a release cause information element, and a value of the release cause information element is the first cause value.

Optionally, the receiver is specifically configured to: receive information that is of the UE and that is used for the access, and establish an RRC connection to the UE;
the transmitter sends a second message to the UE, where the second message includes the security configuration.

Optionally, the first message further includes indication information used to indicate whether there is downlink data.

Optionally, the receiver is further configured to receive an access cause of the access, where the access cause is that the key is to be updated.

Optionally, the first message is an RRC connection release message.

A ninth aspect of this application provides user equipment, including:
a receiver, configured to receive a first message from a network device, where the first message is used for releasing an RRC connection, and the first message includes a security configuration; and
a processor, configured to release the RRC connection, where
the processor is further configured to obtain a new key based on the security configuration.

Optionally, the security configuration includes a next hop chaining count NCC value and a security algorithm.

Optionally, the processor is specifically configured to:
regenerate a base station eNB key KeNB* based on the NCC value and an access security management entity key K_{ASME}; and
generate, based on the eNB key KeNB* and/or the security algorithm, an RRC integrity protection key related to an integrity algorithm.

Optionally, the processor is further configured to:
generate, based on the eNB key KeNB* and/or the security algorithm, an RRC encryption key and a data encryption key that are related to an encryption algorithm.

Optionally, the first message further includes indication information used to indicate whether there is downlink data.

Optionally, the first message is an RRC connection release message.

Optionally, the user equipment further includes:
a transmitter, configured to send a connection message to the network device based on the new key.

Optionally, the transmitter is further configured to indicate, to the network device in a connection process, that a connection cause is that a key is to be updated.

A tenth aspect of this application provides a network device, including:
a transmitter, configured to send a first message to user equipment UE, where the first message is used for releasing an RRC connection, the first message includes a security configuration, and the security configuration is used for obtaining a new key; and
a receiver, configured to receive a connection message sent by the UE based on the new key.

Optionally, the security configuration includes a next hop chaining count NCC value and/or a security algorithm.

Optionally, the first message further includes indication information used to indicate whether there is downlink data.

Optionally, the receiver is further configured to receive an indication that the UE indicates, to the network device in a connection process, that an access cause is that a key is to be updated.

Optionally, the first message is an RRC connection release message.

An eleventh aspect of this application provides user equipment, including:
a receiver, configured to receive a first message that is sent by a network device and that is used in a non-handover condition, where the first message is used for RRC connection reconfiguration, and the first message includes a security configuration;
a processor, configured to obtain a new key based on the security configuration; and
a transmitter, configured to send a second message to the network device based on the new key, where the second message is used to indicate that the connection reconfiguration is completed.

Optionally, the security configuration includes a next hop chaining count NCC value and/or a security algorithm.

Optionally, the processor is specifically configured to:
regenerate a base station eNB key KeNB* based on the NCC value and an access security management entity key K_{ASME}; and
generate, based on the eNB key KeNB* and/or the security algorithm, an RRC integrity protection key related to an integrity algorithm.

Optionally, the processor is further configured to:
generate, based on the eNB key KeNB* and/or the security algorithm, an RRC encryption key and a data encryption key that are related to an encryption algorithm.

Optionally, the first message is an RRC connection reconfiguration message, and the second message is an RRC connection reconfiguration complete message.

A twelfth aspect of this application provides a network device, including:
a transmitter, configured to send a first message used in a non-handover condition to user equipment UE, where the first message is used for RRC connection reconfiguration, the first message includes a security configuration, and the security configuration is used for obtaining a new key; and
a receiver, configured to receive a second message returned by the UE based on the new key, where the second message is used to indicate that the connection reconfiguration is completed.

Optionally, the security configuration includes a next hop chaining count NCC value and a security algorithm.

Optionally, the first message is an RRC connection reconfiguration message, and the second message is an RRC connection reconfiguration complete message.

A thirteenth aspect of this application provides user equipment, including:
a receiving module, configured to receive a first message from a network device, where the first message is used for releasing an RRC connection, the first message includes a first indication, and the first indication is used to indicate that a key is to be updated;
a processing module, configured to release the RRC connection; and
a sending module, configured to initiate access to the network device in response to the first indication to obtain a new security configuration, where the security configuration is used for obtaining a new key.

Optionally, the first indication is a first cause value, the first message includes a release cause information element, and a value of the release cause information element is the first cause value.

Optionally, the sending module is specifically configured to initiate the access to the network device to establish an RRC connection to the network device;
the receiving module is further configured to receive a second message from the network device, where the second message includes the security configuration.

Optionally, the first message further includes indication information used to indicate whether there is downlink data.

Optionally, the sending module is further configured to indicate, to the network device when initiating the access to the network device, that an access cause is that the key is to be updated.

Optionally, the first message is an RRC connection release message.

A fourteenth aspect of this application provides a network device, including:
a sending module, configured to send a first message to user equipment UE, where the first message is used for releasing an RRC connection, the first message includes a first indication, and the first indication is used to indicate that a key is to be updated; and
a receiving module, configured to accept access initiated by the UE in response to the first indication, to send a security configuration to the UE, where the security configuration is used for obtaining a new key.

Optionally, the first indication is a first cause value, the first message includes a release cause information element, and a value of the release cause information element is the first cause value.

Optionally, the receiving module is specifically configured to: receive information that is of the UE and that is used for the access, and establish an RRC connection to the UE;
the sending module is further configured to send a second message to the UE, where the second message includes the security configuration.

Optionally, the first message further includes indication information used to indicate whether there is downlink data.

Optionally, the receiving module is further configured to receive an access cause of the access, where the access cause is that the key is to be updated.

Optionally, the first message is an RRC connection release message.

A fifteenth aspect of this application provides user equipment, including:
a receiving module, configured to receive a first message from a network device, where the first message is used for releasing an RRC connection, and the first message includes a security configuration; and
a processing module, configured to release the RRC connection, where
the processing module is further configured to obtain a new key based on the security configuration.

Optionally, the security configuration includes a next hop chaining count NCC value and a security algorithm.

Optionally, the processing module is specifically configured to:
regenerate a base station eNB key KeNB* based on the NCC value and an access security management entity key K_{ASME}; and
generate, based on the eNB key KeNB* and/or the security algorithm, an RRC integrity protection key related to an integrity algorithm.

Optionally, the processing module is further configured to:
generate, based on the eNB key KeNB* and/or the security algorithm, an RRC encryption key and a data encryption key that are related to an encryption algorithm.

Optionally, the first message further includes indication information used to indicate whether there is downlink data.

Optionally, the first message is an RRC connection release message.

Optionally, the user equipment further includes:
a sending module, configured to send a connection message to the network device based on the new key.

Optionally, the sending module is further configured to indicate, to the network device in a connection process, that a connection cause is that a key is to be updated.

A sixteenth aspect of this application provides a network device, including:
a sending module, configured to send a first message to user equipment UE, where the first message is used for releasing an RRC connection, the first message includes a security configuration, and the security configuration is used for obtaining a new key; and
a receiving module, configured to receive a connection message sent by the UE based on the new key.

Optionally, the security configuration includes a next hop chaining count NCC value and/or a security algorithm.

Optionally, the first message further includes indication information used to indicate whether there is downlink data.

Optionally, the receiving module is further configured to receive an indication that the UE indicates, to the network device in a connection process, that an access cause is that a key is to be updated.

Optionally, the first message is an RRC connection release message.

A seventeenth aspect of this application provides user equipment, including:
a receiving module, configured to receive a first message that is sent by a network device and that is used in a non-handover condition, where the first message is used for RRC connection reconfiguration, the first message includes a security configuration, and the security configuration is used for obtaining a new key;
a processing module, configured to obtain the new key based on the security configuration; and
a sending module, configured to send a second message to the network device based on the new key, where the second message is used to indicate that the connection reconfiguration is completed.

Optionally, the security configuration includes a next hop chaining count NCC value and a security algorithm.

Optionally, the processing module is specifically configured to:
regenerate a base station eNB key KeNB* based on the NCC value and an access security management entity key K_{ASME}; and
generate, based on the eNB key KeNB* and/or the security algorithm, an RRC integrity protection key related to an integrity algorithm.

Optionally, the processing module is further configured to:
generate, based on the eNB key KeNB* and/or the security algorithm, an RRC encryption key and a data encryption key that are related to an encryption algorithm.

Optionally, the first message is an RRC connection reconfiguration message, and the second message is an RRC connection reconfiguration complete message.

An eighteenth aspect of this application provides a network device, including:
a sending module, configured to send a first message used in a non-handover condition to user equipment UE, where the first message is used for RRC connection reconfiguration, the first message includes a security configuration, and the security configuration is used for obtaining a new key; and
a receiving module, configured to receive a second message returned by the UE based on the new key, where the second message is used to indicate that the connection reconfiguration is completed.

Optionally, the security configuration includes a next hop chaining count NCC value and a security algorithm.

Optionally, the first message is an RRC connection reconfiguration message, and the second message is an RRC connection reconfiguration complete message.

A nineteenth aspect of this application provides a computer-readable storage medium, where the computer-readable storage medium stores a computer instruction, and the computer instruction enables user equipment to perform the key update method provided in any one of the implementations in the first aspect, the third aspect, or the fifth aspect.

A twentieth aspect of this application provides a computer-readable storage medium, where the computer-readable storage medium stores a computer instruction, and the computer instruction enables a network device to perform the key update method provided in any one of the implementations in the second aspect, the fourth aspect, or the sixth aspect.

A twenty-first aspect of this application provides a computer program product, where the computer program product includes computer program code, and when the computer program code is run by user equipment, the user equipment is enabled to perform the key update method provided in any one of the implementations in the first aspect, the third aspect, or the fifth aspect.

A twenty-second aspect of this application provides a computer program product, where the computer program product includes computer program code, and when the computer program code is run by a network device, the network device is enabled to perform the key update method provided in any one of the implementations in the second aspect, the fourth aspect, or the sixth aspect.

The embodiments of this application provide the key update method, the device, and the storage medium. After determining that the key needs to be updated, the network device sends, to the user equipment, the first message used for releasing the RRC connection, where the message carries an indication used to indicate that the key is to be updated. After receiving the first message, the user equipment releases the RRC connection, and may determine that a release cause is that the key needs to be updated. In this case, the user equipment actively initiates an access process, obtains the new security configuration to complete updating the key, and does not need to wait for data to be uploaded or paging of the network device to perform access, thereby effectively shortening a disconnection time of the user equipment. In addition, the network device does not need to page the user equipment, thereby saving the radio resources on the network side.

### BRIEF DESCRIPTION OF DRAWINGS

FIG. 1 is a schematic diagram of an application scenario of a key update method according to an embodiment of this application;
FIG. 2 is a schematic diagram of NB-IoT UP air interface security protection according to an embodiment of this application;
FIG. 3 is a schematic diagram of NB-IoT key hierarchy according to an embodiment of this application;
FIG. 4 is an interaction flowchart of Embodiment 1 of a key update method according to an embodiment of this application;
FIG. 5 is an interaction flowchart of Embodiment 2 of a key update method according to an embodiment of this application;
FIG. 6 is a schematic structural diagram of Embodiment 1 of user equipment according to an embodiment of this application;
FIG. 7 is a schematic structural diagram of a network device;
FIG. 8 is a schematic structural diagram of Embodiment 2 of user equipment according to an embodiment of this application; and
FIG. 9 is a schematic structural diagram of a network device.

### DESCRIPTION OF EMBODIMENTS

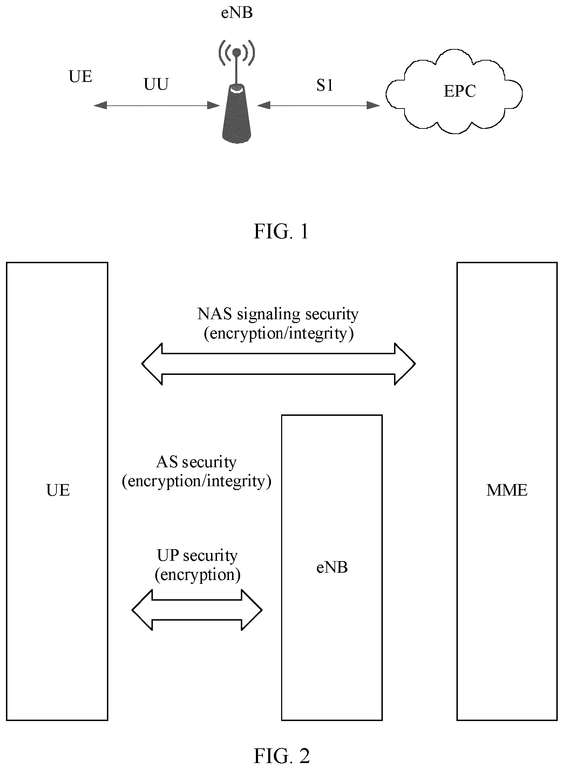

FIG. 1 is a schematic diagram of an application scenario of a key update method according to an embodiment of this application. As shown in FIG. 1, the key update method provided in this application is specifically applied to a narrowband internet of things (NarrowBand Internet of Things, NB-IoT) or a similar internet of things system that does not support handover. In the NB-IoT communications system in this application, main network elements include a core network (for example, a packet core network (Evolved Packet Core, EPC)), a network device (for example, an eNB base station), and user equipment (user equipment, UE). The UE accesses the network device via the base station or a routing node, and the network device is connected to the core network to complete data backhaul and forward transmission.

The technical solutions of embodiments of this application may be further applied to a 5G or a future communications system, and may also be applied to various other communications systems, such as a global system for mobile communications (Global System of Mobile communication, GSM) system, a code division multiple access (CDMA, Code Division Multiple Access) system, a wideband code division multiple access (Wideband Code Division Multiple Access, WCDMA) system, a general packet radio service (General Packet Radio Service, GPRS), a long term evolution (Long Term Evolution, LTE) system, an LTE frequency division duplex (Frequency Division Duplex, FDD) system, an LTE time division duplex (Time Division Duplex, TDD), and a universal mobile telecommunications system (Universal Mobile Telecommunication System, UMTS).

It should be understood that the network device in this solution may be a base station (Base Transceiver Station, BTS for short) in the global system for mobile communications (Global System of Mobile communication, GSM for short) or the code division multiple access (Code Division Multiple Access, CDMA for short), or may be a base station (NodeB, NB for short) in the wideband code division multiple access (Wideband Code Division Multiple Access, WCDMA for short), or may be an evolved NodeB (Evolutional Node B, eNB or eNodeB for short) in LTE, a relay station or an access point, a base station in a 5G network, or the like. This is not limited herein.

The user equipment may be a wireless terminal or a wired terminal. The wireless terminal may refer to a device that provides a user with voice and/or other service data connectivity, a handheld device with a wireless connection function, or another processing device connected to a wireless modem. The wireless terminal may communicate with one or more core networks through a radio access network (Radio Access Network, RAN for short). The wireless terminal may be a mobile terminal such as a mobile phone (also referred to as a "cellular" phone) or a computer with a mobile terminal, for example, may be a portable, pocket-sized, handheld, computer built-in, or vehicle-mounted mobile apparatus, which exchanges voice and/or data with the radio access network. For example, it may be a device such as a personal communication service (Personal Communication Service, PCS for short) phone, a cordless telephone set, a Session Initiation Protocol (Session Initiation Protocol, SIP for short) phone, a wireless local loop (Wireless Local Loop, WLL for short) station, or a personal digital assistant (Personal Digital Assistant, PDA for short). The wireless terminal may alternatively be referred to as a system, a subscriber unit (Subscriber Unit), a subscriber station (Subscriber Station), a mobile station (Mobile Station), a mobile station (Mobile), a remote station (Remote Station), a remote terminal (Remote Terminal), an access terminal (Access Terminal), a user terminal (User Terminal), a user agent (User Agent), or a user device (User Device or User Equipment). This is not limited herein.

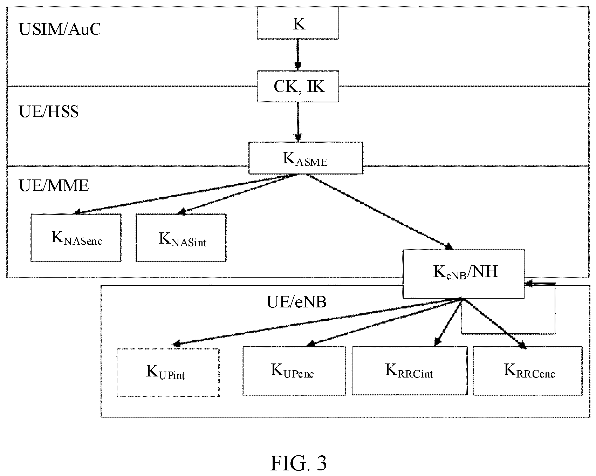

FIG. 2 is a schematic diagram of NB-IoT UP air interface security protection according to an embodiment of this application. FIG. 3 is a schematic diagram of NB-IoT key hierarchy according to an embodiment of this application. As shown in FIG. 2, in an NB-IoT security mechanism, the following security protection for the air interface in a UP mode is provided: Encryption and integrity protection are performed on an NAS; encryption and integrity protection are performed on a control plane of an AS, and encryption is performed on a user plane of the AS. The encryption and the integrity protection on the AS are implemented in PDCP through RRC negotiation and key generation.

Generally, a key is generated based on a KDF algorithm. The KDF algorithm is short for an HmacSha256 algorithm, is a hash-based message authentication algorithm, and can be considered as a combination of an HMAC algorithm and an SHA256 algorithm. An input of the KDF algorithm is two strings that each have fewer than 2^64 bits, and an output is a string of 256 bits. FIG. 3 specifically shows the key hierarchy below.

K: A K is stored in a universal subscriber identity module (Universal Subscriber Identity Module, USIM) card of UE, and is also stored in an authentication center AuC.

CK and IK: A CK and an IK are generated by the UE and the AuC in a key agreement AKA process.

KASME: A KASME is generated by the CK and the IK in the AKA process.

KNASenc and KNASint: A KNASenc and a KNASint are keys used for encryption and integrity check on an NAS, and are generated by the K-ASME.

KeNB or NH: A KeNB or an NH can be used to generate three keys for final encryption and integrity check.

KUPenc: A KUPenc is used for encryption on a user plane of an AS.

KRRCint: A KRRCint is used for integrity check on a control plane of the AS.

KRRCenc: A KRRCenc is used for encryption on the control plane of the AS.

In a current key update solution, the UE releases a connection, and waits until the UE is paged or there is data to be uploaded, to negotiate a new key in a random access process. In a key update process, the UE is disconnected for a relatively long time, and because a key needs to be updated, problems such as a waste of a large quantity of radio resources on a network side for paging the UE may be caused. This application provides a new key update method, to shorten a disconnection time of the UE, and save network resources.

The following uses an example in which a network device is an eNB to describe the key update method by using some specific embodiments.

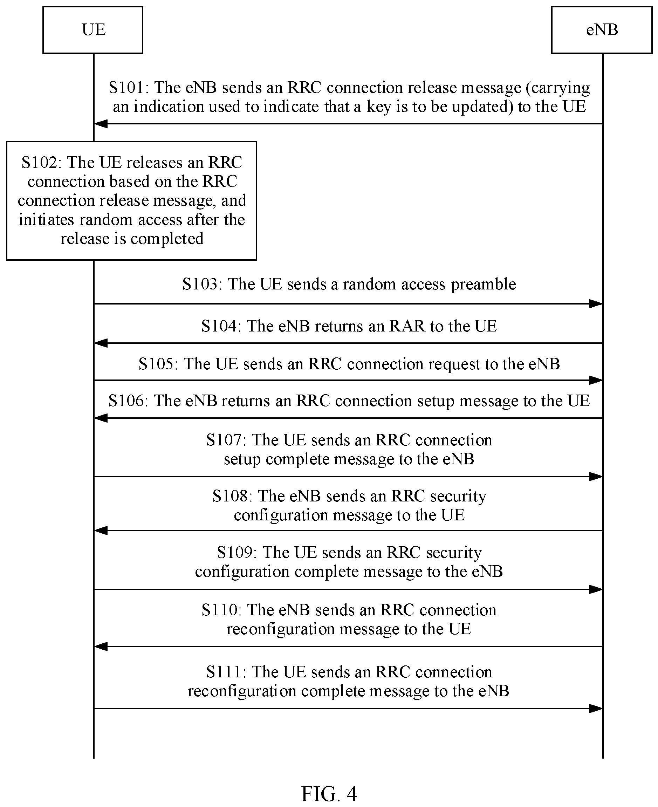

FIG. 4 is an interaction flowchart of Embodiment 1 of a key update method according to an embodiment of this application. As shown in FIG. 4, the key update method includes the following steps.

S101: An eNB sends an RRC connection release message (carrying an indication used to indicate that a key is to be updated) to UE.

In this step, after the eNB determines that the key needs to be updated, the UE needs to disconnect an RRC connection to perform security reconfiguration to update the key. Therefore, the eNB may send, to the UE, a message indicating connection release, where the message may be an RRC connection release message, or may be another message. In addition to indicating the UE to release the RRC connection, the RRC connection release message further carries an indication used to indicate that a cause for releasing the RRC connection is that the key is to be updated.

In a specific implementation, the message may carry a release cause information element, and a value of the release cause information element indicates that the release cause is that the key is to be updated. For example, an enumerated value keyChange is newly added to a release cause (release cause) in the RRC connection release (namely, RRCConnectionRelease) message.

Optionally, the RRC connection release message may further indicate whether there is downlink data in the eNB; to be specific, may further include indication information used to indicate whether there is the downlink data. This is not limited in this solution.

S102: The UE releases the RRC connection based on the RRC connection release message, and initiates random access after the release is completed.

In this step, after receiving the message, the UE releases the RRC connection based on the RRC connection release message. In addition, the UE determines, based on the indication carried in the RRC connection release message, that the cause of the current release is to update the key. Therefore, the UE may directly initiate the random access without needing to wait for paging of the eNB or wait until there is uplink data that needs to be transmitted.

That is, in a specific implementation of the solution, when receiving a release cause indication key Change that is in the RRCConnectionRelease message, the user equipment needs to perform an operation when leaving RRC_CONNECTED, and the release cause is "key change". After releasing the connection, the user equipment re-initiates an RRC connection, accesses a network, and re-negotiates a new AS key with the network. A specific negotiation process is described in the following steps.

S103. The UE sends a random access preamble.

S104: The eNB returns a random access response (Random Access Response, RAR) to the UE.

S105: The UE sends an RRC connection request to the eNB.

S106: The eNB returns an RRC connection setup message to the UE.

S107: The UE sends an RRC connection setup complete message to the eNB.

In the foregoing steps, the UE sends the random access preamble to initiate the random access. After detecting that there is a sent preamble, the eNB sends the random access response RAR in a downlink, where the RAR may carry timing information, a resource configuration, and the like. After receiving the random access response, the UE sends an uplink message, in other words, sends the RRC connection request, on an allocated uplink resource based on an indication of the random access response. The eNB receives the RRC connection request of the UE, and returns a conflict resolution message, in other words, returns the RRC connection setup complete message, to UE that successfully accesses the eNB.

Optionally, in a specific implementation of this solution, when initiating an access process, the UE may further simultaneously indicate, to the eNB, that a cause for the access is that the key is to be updated.

S108: The eNB sends an RRC security configuration message to the UE.

In this step, the base station eNB sends a new security configuration (including information such as a derivation parameter of the key) to the UE, that is, delivers, to the UE, a second message used to configure the key, where the second message may be the RRC security configuration message. In a specific implementation of this solution, the second message includes the new security configuration.

The derivation parameter of the key in this solution is a parameter used to calculate a new key, for example, a parameter such as a next hop chaining count.

S109: The UE sends an RRC security configuration complete message to the eNB.

In this step, the UE may obtain an RRC encryption key and a data encryption key based on the new security configuration in the received security configuration, may further obtain an RRC integrity protection key, and may send, to the eNB, a message indicating that RRC security configuration is completed.

S110: The eNB sends an RRC connection reconfiguration message to the UE.

S111: The UE sends an RRC connection reconfiguration complete message to the eNB.

In the foregoing steps, connection reconfiguration between the base station and the UE is completed in the foregoing process, and a key update process is also completed.

In a specific implementation of this solution, it should be understood that, in the foregoing embodiment, the new key is negotiated after connection setup is completed; in other words, security configuration is performed after the connection setup is completed. Considering a case of early data transmission, in this solution, a security configuration process performed in the access process is also supported. In other words, the UE releases the RRC connection based on the RRC connection release message, initiates the access to the network device after completing the release, and obtains the new key through negotiation in the access process or after establishing the connection to the eNB. This is not limited in this solution.

This embodiment provides the key update method. After determining that the key needs to be updated, the eNB sends the RRC connection release message to the user equipment, where the message carries the indication used to indicate that the key is to be updated. After receiving the message, the user equipment releases the RRC connection, and may determine that the release cause is that the key needs to be updated. In this case, the user equipment actively initiates the access process, obtains the new security configuration to complete updating the key, and does not need to wait for data to be uploaded or paging of the eNB to perform access, thereby effectively shortening a disconnection time of the user equipment. In addition, the network device does not need to page the user equipment, thereby saving radio resources on a network side.

Based on the embodiment shown in FIG. 4, in addition to a case in which the RRC connection release message sent by the eNB to the UE carries a first indication indicating that the key is to be updated, in another implementation, the RRC connection release message sent by the eNB to the UE does not carry the first indication indicating that the key is to be updated, and instead directly carries a security configuration, where the security configuration includes some parameters, such as an NCC value and a security algorithm, for calculating a new key. The security algorithm may include an integrity protection algorithm and an encryption algorithm. After receiving the RRC connection release message, the UE releases an RRC connection based on the message, and then obtains the new key based on the security configuration. After obtaining the key, the UE may directly initiate access, or may initiate an access process when there is data to be uploaded, where the random access process is similar to that in the prior art, or the eNB pages the UE when the eNB has downlink data to be transmitted, to establish a connection to the UE. After the connection establishment is completed, the UE performs integrity protection and/or encryption based on the new key, and then performs data transmission.

Similarly, the RRC connection release message may also include indication information used to indicate whether there is the downlink data. In a process in which the UE obtains the new key and establishes the connection to the eNB, the UE may indicate, to the eNB, that a connection cause is that the key is to be updated.

In this solution, security protection is also performed, based on the new key, on a connection message sent by the UE.

When an RRCConnectionReconfiguration message received by the UE includes an IE Security config, the UE needs to perform the following operations to obtain the new key based on the security configuration in a specific implementation.

Media access control (Media Access Control, MAC) is reset.

The packet data convergence protocol (Packet Data Convergence Protocol, PDCP) is reestablished for all resource blocks (resource block, RB).

The radio link control (Radio Link Control, RLC) protocol for all RBs is reestablished.

For example, a KeNB key is updated based on a KASME key associated with a current KeNB based on a nextHopChainingCount value indicated in an RRCConnectionReestablishment message specified in the latest version of TS 33.401.

The nextHopChainingCount value is stored.

For example, a KRRCint key, namely, an RRC integrity protection key, related to a previously configured integrity algorithm is derived according to specifications in the latest version of TS 33.401.

For example, a KRRCenc key and a KUPenc key, namely, an RRC encryption key and a data encryption key, related to a previously configured encryption algorithm are derived according to specifications in the latest version of TS 33.401.

In this solution, a key hierarchy and a key calculation manner are implemented according to the solution shown in FIG. 3, and reference may be made to the description corresponding to FIG. 3.

In the foregoing solution, an example in which the eNB is the network device is used. In an actual application process, another network device may be the network device. The key update method provided in this application is described. With reference to the technical solutions in the foregoing two embodiments, it may be learned that there are at least two cases in which the UE obtains the new key based on the message indicating to release the RRC connection.

In the first case, the UE performs the following solution to obtain the new key:
receiving a first message from the network device, where the first message is used for releasing the RRC connection, the first message includes the first indication, and the first indication is used to indicate that the key is to be updated; releasing the RRC connection; and initiating the access to the network device in response to the first indication to obtain the new security configuration, where the security configuration is used for obtaining the new key.

In a specific implementation, the first indication is a first cause value, the first message includes a release cause information element, and a value of the release cause information element is the first cause value.

In another specific implementation, the initiating the random access to the network device to obtain the new security configuration includes:
initiating the access to the network device to establish an RRC connection to the network device; and
receiving a second message from the network device, where the second message includes the security configuration.

Optionally, the first message further includes the indication information used to indicate whether there is the downlink data.

Further, the UE may further indicate, to the network device when initiating the access to the network device, that an access cause is that the key is to be updated.

Optionally, the first message is the RRC connection release message.

Corresponding to the foregoing execution process of the UE, the network device in this case performs the following solution:
sending a first message to the UE, where the first message is used for releasing the radio resource control RRC connection, the first message includes the first indication, and the first indication is used to indicate that the key is to be updated; and accepting the access initiated by the UE in response to the first indication, to send the security configuration to the UE, where the security configuration is used for obtaining the new key.

In a specific implementation, the first indication is a first cause value, the first message includes a release cause information element, and a value of the release cause information element is the first cause value.

In a specific implementation, the accepting the access initiated by the UE in response to the first indication, to send the security configuration to the UE includes:
receiving information that is of the UE and that is used for the access, and establishing an RRC connection to the UE; and
sending a second message to the UE, where the second message includes the security configuration.

Optionally, the first message further includes the indication information used to indicate whether there is the downlink data.

Further, the network device may further receive an access cause of the access, where the access cause is that the key is to be updated.

Optionally, the first message is the RRC connection release message.

In the second case, the UE performs the following solution to obtain the new key:
receiving, by the UE, a first message from the network device, where the first message is used for releasing the RRC connection, and the first message includes the security configuration; releasing the RRC connection; and obtaining the new key based on the security configuration.

In a specific implementation of this solution, the security configuration includes the NCC value and the security algorithm.

Optionally, the obtaining the new key based on the security configuration includes:
regenerating a base station eNB key KeNB* based on the NCC value and an access security management entity key K_{ASME}; and
generating, based on the eNB key KeNB* and/or the security algorithm, the RRC integrity protection key related to the integrity algorithm.

Further, the UE may further generate, based on the eNB key KeNB* and/or the security algorithm, the RRC encryption key and the data encryption key that are related to the encryption algorithm.

Optionally, the first message further includes the indication information used to indicate whether there is the downlink data.

Optionally, the first message is the RRC connection release message.

Optionally, the UE further sends a connection message to the network device based on the new key.

Further, the UE may further indicate, to the network device in a connection process, that the connection cause is that the key is to be updated.

Corresponding to the foregoing execution process of the UE, the network device in this case performs the following solution:
sending a first message to the user equipment UE, where the first message is used for releasing the RRC connection, the first message includes the security configuration, and the security configuration is used for obtaining the new key; and
receiving a connection message sent by the UE based on the new key.

In a specific implementation, the security configuration includes the next hop chaining count NCC value and/or the security algorithm.

Optionally, the first message further includes the indication information used to indicate whether there is the downlink data.

Further, the network device may further receive an indication that the UE indicates, to the network device in a connection process, that an access cause is that the key is to be updated.

Optionally, the first message is the RRC connection release message.

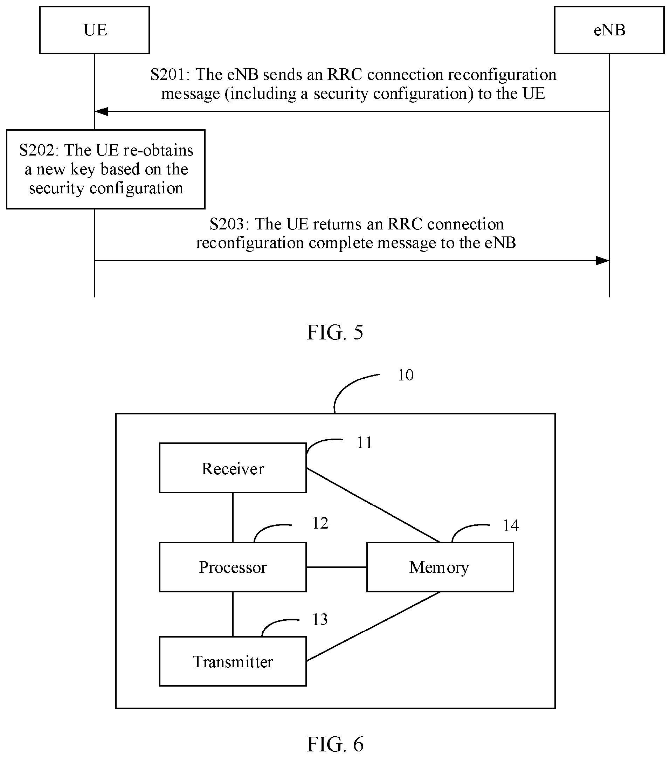

FIG. 5 is an interaction flowchart of Embodiment 2 of a key update method according to an embodiment of this application. As shown in FIG. 5, in another implementation, UE can obtain a new key without needing to release an RRC connection. Similarly, using an eNB as an example, the key update method includes the following steps.

S201: An eNB sends an RRC connection reconfiguration message (including a security configuration) to the UE.

In this process, the UE and the eNB are in a connected state. When determining that a key needs to be updated, the eNB may update the key in a connection reconfiguration process. To be specific, the eNB sends the RRC connection reconfiguration message to the UE, where the RRC connection reconfiguration message carries the security configuration, to indicate the UE to update the key. That is, an IE Security config is newly added to an RRCConnectionReconfiguration message sent by the eNB to the UE.

In a specific implementation of the solution, a specific definition of the IE Security config is as follows:

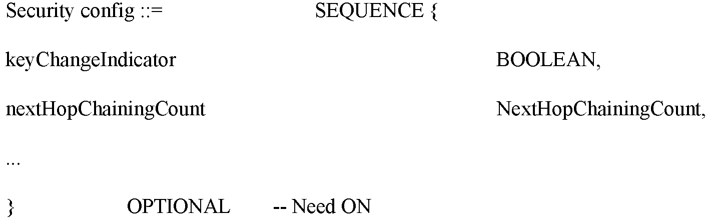

In a specific implementation of the foregoing solution, the security configuration includes at least a next hop chaining count (nextHopChainingCount, NCC) value and a security algorithm, so that the UE can obtain the new key through calculation based on the parameters.

S202: The UE re-obtains the new key based on the security configuration.

In this step, after receiving the RRC connection reconfiguration message including the security configuration, the UE needs to calculate an RRC integrity protection key and an encryption key based on the parameter and the security algorithm in the security configuration.

In a specific implementation, when the RRCConnectionReconfiguration message received by the UE includes the IE Security config, the UE needs to perform the following operations to obtain the new key based on the security configuration in a specific implementation.

Media access control (Media Access Control, MAC) is reset.

The packet data convergence protocol (Packet Data Convergence Protocol, PDCP) is reestablished for all resource blocks (resource block, RB).

The radio link control (Radio Link Control, RLC) protocol for all RBs is reestablished.

A KeNB key is updated based on a KASME key associated with a current KeNB based on a nextHopChainingCount value indicated in an RRCConnectionReestablishment message specified in TS 33.401.

The nextHopChainingCount value is stored.

A KRRCint key, namely, the RRC integrity protection key, related to a previously configured integrity algorithm is derived according to specifications in TS 33.401.

A KRRCenc key and a KUPenc key, namely, an RRC encryption key and a data encryption key, related to a previously configured encryption algorithm are derived according to specifications in TS 33.401.

In this solution, a key hierarchy and a key calculation manner are implemented according to the solution shown in FIG. 3, and reference may be made to the description corresponding to FIG. 3.

S203: The UE returns an RRC connection reconfiguration complete message to the eNB.

In this step, after obtaining the new key based on the security configuration, the UE returns the RRC connection reconfiguration complete message to the eNB, to notify the eNB that the new key has been obtained, and that security configuration is completed.

In a specific implementation of this solution, after the UE completes the foregoing process, when there is uplink data that needs to be transmitted, the UE may perform integrity protection and encryption based on the new key, to perform data transmission.

According to the key update method provided in this embodiment, the eNB sends, to the UE, the RRC connection reconfiguration message carrying the new security configuration. The UE does not need to release the RRC connection, and directly obtains the new key based on the new security configuration to complete a key update process. The base station does not need to release the UE, so that the UE does not need to perform access again, and the base station does not need to page the UE when there is data to be delivered, thereby effectively shortening a key update time and saving network resources.

In the foregoing solution, an example in which the eNB is the network device is used. In an actual application process, another network device may be the network device. The key update method provided in this application is described. With reference to the technical solution in the foregoing embodiment, it may be learned that in a manner in which the UE is enabled to obtain the new key based on a message indicating the security configuration, the UE needs to perform the following solution:
receiving, by the UE, a first message that is sent by the network device and that is used in a non-handover condition, where the first message is used for RRC connection reconfiguration, and the first message includes the security configuration; obtaining the new key based on the security configuration; and sending a second message to the network device based on the new key, where the second message is used to indicate that the connection reconfiguration is completed.

In a specific implementation of this solution, the security configuration includes the NCC value and/or the security algorithm.

In another specific implementation of the solution, the obtaining the new key based on the security configuration includes:
regenerating a base station eNB key KeNB* based on the NCC value and an access security management entity key K_{ASME}; and
generating, based on the eNB key KeNB* and/or the security algorithm, the RRC integrity protection key related to the integrity algorithm.

Further, the UE may further generate, based on the eNB key KeNB* and/or the security algorithm, the RRC encryption key and the data encryption key that are related to the encryption algorithm.

During implementation of the foregoing solution, if the first message is the RRC connection reconfiguration message, the second message is the RRC connection reconfiguration complete message.

Corresponding to the foregoing execution process of the UE, the network device in this case performs the following solution:
sending, by the network device, a first message used in a non-handover condition to the UE, where the first message is used for RRC connection reconfiguration, the first message includes the security configuration, and the security configuration is used for obtaining the new key; and receiving a second message returned by the UE based on the new key, where the second message is used to indicate that the connection reconfiguration is completed.

Optionally, the security configuration includes the NCC value and the security algorithm.

Optionally, the first message is the RRC connection reconfiguration message, and the second message is the RRC connection reconfiguration complete message.

Compared with the foregoing embodiments, in the prior art, when a key of a base station is updated, a current system can only release UE first. When downlink data arrives, the UE is paged for access, or when uplink data arrives, the UE actively initiates access. The key is updated by configuring a new key in an access process. There is a problem that the UE is disconnected for a relatively long time, or if there is downlink data to be sent, because the key needs to be updated, a large quantity of radio resources on a network side may be wasted for paging the UE. In the key update solution provided in this application, after releasing the UE, the network device indicates a release cause in an RRC connection release message, so that the UE initiates the access in a timely manner after releasing the connection. Alternatively, the network device enables an RRC connection release message to directly carry the security configuration, so that the UE can directly obtain the new key through calculation. Alternatively, the network device enables the RRC connection reconfiguration message to directly carry the security configuration, so that the UE can directly obtain the new key through calculation. Therefore, a key update time and a time of the UE in a disconnected state are effectively shortened. In addition, the network device does not need to page the UE, thereby saving the network resources.

FIG. 6 is a schematic structural diagram of Embodiment 1 of user equipment according to an embodiment of this application. As shown in FIG. 6, user equipment 10 provided in this embodiment includes:
a receiver 11, configured to receive a first message from a network device, where the first message is used for releasing an RRC connection, the first message includes a first indication, and the first indication is used to indicate that a key is to be updated;
a processor 13, configured to release the RRC connection; and
a transmitter 13, configured to initiate access to the network device in response to the first indication to obtain a new security configuration, where the security configuration is used for obtaining a new key.

In a specific implementation of the user equipment, the user equipment may further include a memory 14, configured to store a computer program or other data. This is not limited in this solution.

The user equipment provided in this embodiment is configured to perform the technical solution on a user equipment side according to any one of the foregoing method embodiments, and implementation principles and technical effects of the embodiments are similar.

Optionally, the first indication is a first cause value, the first message includes a release cause information element, and a value of the release cause information element is the first cause value.

Optionally, the transmitter 13 is specifically configured to initiate the access to the network device to establish an RRC connection to the network device;
the receiver 11 is further configured to receive a second message from the network device, where the second message is used to configure a key, and the second message includes the new security configuration and/or a security algorithm parameter.

Optionally, the first message further includes indication information used to indicate whether there is downlink data.

Optionally, the transmitter 13 is further configured to indicate, to the network device when initiating the access to the network device, that an access cause is that the key is to be updated.

Optionally, the first message is an RRC connection release message.

The user equipment provided in any one of the foregoing implementations is configured to perform the technical solution on the user equipment side according to any one of the foregoing method embodiments, and implementation principles and technical effects of the embodiments are similar.

In another implementation of the user equipment 10 shown in FIG. 6, the user equipment 10 includes:
a receiver 11, configured to receive a first message from a network device, where the first message is used for releasing an RRC connection, and the first message includes a security configuration; and
a processor 12, configured to release the RRC connection, where
the processor 12 is further configured to obtain a new key based on the security configuration.

The user equipment 10 may further include a memory 14 configured to store a computer program.

Optionally, the security configuration includes a next hop chaining count NCC value and a security algorithm.

Optionally, the processor 12 is specifically configured to:
regenerate a base station eNB key KeNB* based on the NCC value and an access security management entity key KASME; and
generate, based on the eNB key KeNB* and/or the security algorithm, an RRC integrity protection key related to an integrity algorithm.

Optionally, the processor 12 is further configured to:
generate, based on the eNB key KeNB* and/or the security algorithm, an RRC encryption key and a data encryption key that are related to an encryption algorithm.

Optionally, the first message further includes indication information used to indicate whether there is downlink data.

Optionally, the first message is an RRC connection release message.

Optionally, the user equipment further includes:
a transmitter 13, configured to send a connection message to the network device based on the new key.

Optionally, the transmitter is further configured to indicate, to the network device in a connection process, that a connection cause is that a key is to be updated.

The user equipment provided in any one of the foregoing implementations is configured to perform the technical solution on a user equipment side according to any one of the foregoing method embodiments, and implementation principles and technical effects of the embodiments are similar.

In another implementation of the user equipment 10 shown in FIG. 6, the user equipment 10 includes:
a receiver 11, configured to receive a first message that is sent by a network device and that is used in a non-handover condition, where the first message is used for RRC connection reconfiguration, and the first message includes a security configuration;
a processor 12, configured to obtain a new key based on the security configuration; and
a transmitter 13, configured to send a second message to the network device based on the new key, where the second message is used to indicate that the connection reconfiguration is completed.

Optionally, the security configuration includes a next hop chaining count NCC value and a security algorithm.

Optionally, the processor 12 is specifically configured to:
regenerate a base station eNB key KeNB* based on the NCC value and an access security management entity key K_{ASME}; and
generate, based on the eNB key KeNB* and/or the security algorithm, an RRC integrity protection key related to an integrity algorithm.

Optionally, the processor 12 is further configured to:
generate, based on the eNB key KeNB* and/or the security algorithm, an RRC encryption key and a data encryption key that are related to an encryption algorithm.

Optionally, the first message is an RRC connection reconfiguration message, and the second message is an RRC connection reconfiguration complete message.

The user equipment provided in any one of the foregoing implementations is configured to perform the technical solution on a user equipment side according to any one of the foregoing method embodiments, and implementation principles and technical effects of the embodiments are similar.

It should be understood that the user equipment in this solution may be a mobile phone, a tablet computer, a smart car, a sensing device, an IoT device, CPE, a relay base station, or the like, for example, 5G UE (UE supporting a next-generation mobile communications standard), or another 5G terminal device. In addition to the foregoing structure, the user equipment may further include one or more transceivers to implement functions of the foregoing receiver and transmitter, one or more antennas, one or more processors, and one or more memories. The memories may be integrated into the processors. This is not limited in this solution.

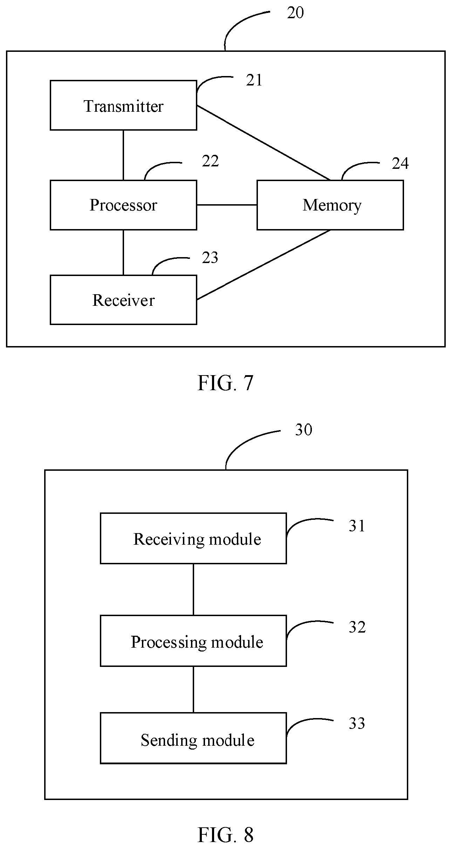

FIG. 7 is a schematic structural diagram of a network device. As shown in FIG. 7, a network device 20 includes:
a transmitter 21, configured to send a first message to user equipment UE, where the first message is used for releasing an RRC connection, the first message includes a first indication, and the first indication is used to indicate that a key is to be updated; and
a receiver 23, configured to accept access initiated by the UE in response to the first indication to send a security configuration to the UE, where the security configuration is used for obtaining a new key.

In a specific implementation of the network device 20, the network device 20 may further include a processor 22 and a memory 24 that stores a computer program and data. This is not limited in this disclosure.

Optionally, the first indication is a first cause value, the first message includes a release cause information element, and a value of the release cause information element is the first cause value.

Optionally, the receiver 23 is specifically configured to: receive information that is of the UE and that is used for the access, and establish an RRC connection to the UE;
the transmitter 21 sends a second message to the UE, where the second message includes the security configuration.

Optionally, the first message further includes indication information used to indicate whether there is downlink data.

Optionally, the receiver 23 is further configured to receive an access cause of the access, where the access cause is that the key is to be updated.

Optionally, the first message is an RRC connection release message.

The network device provided in any one of the foregoing implementations is configured to perform the technical solution on a network device side according to any one of the foregoing method embodiments, and implementation principles and technical effects of the embodiments are similar.

In a specific implementation of the network device 20 shown in FIG. 7, the network device 20 includes:
a transmitter 21, configured to send a first message to user equipment UE when a key is to be updated, where the first message is used for releasing an RRC connection, the first message includes a security configuration, and the security configuration is used for obtaining a new key; and
a receiver 23, configured to receive a connection message sent by the UE based on the new key.

Optionally, the security configuration includes a next hop chaining count NCC value and/or a security algorithm.

Optionally, the first message further includes indication information used to indicate whether there is downlink data.

Optionally, the receiver 23 is further configured to receive an indication that the UE indicates, to the network device in a connection process, that an access cause is that the key is to be updated.

Optionally, the first message is an RRC connection release message.

The network device provided in any one of the foregoing implementations is configured to perform the technical solution on a network device side according to any one of the foregoing method embodiments, and implementation principles and technical effects of the embodiments are similar.

Optionally, in a specific implementation of the network device 20 shown in FIG. 7, the network device 20 includes:
a transmitter 21, configured to send a first message used in a non-handover condition to user equipment UE, where the first message is used for RRC connection reconfiguration, and the first message includes a security configuration; and
a receiver 23, configured to receive a second message returned by the UE based on the new key, where the second message is used to indicate that the connection reconfiguration is completed.

Optionally, the security configuration includes a next hop chaining count NCC value and/or a security algorithm.

Optionally, the first message is an RRC connection reconfiguration message, and the second message is an RRC connection reconfiguration complete message.

Similarly, in addition to some network devices described above, the network device in this solution may alternatively be a 5G gNB (a base station in a next-generation mobile communications network), a transmission reception point (TRP), or another network device (such as a micro base station) in a 5G access network. The network device further includes one or more transceivers implementing functions of the receiver and the transmitter, one or more antennas, one or more processors, and one or more memories. The memories may be integrated into the processors for implementation. Further, the network device may further include one or more other interfaces (such as an optical fiber link interface, an Ethernet interface, and/or a copper wire interface). This is not limited in this solution.

The network device provided in any one of the foregoing implementations is configured to perform the technical solution on a network device side according to any one of the foregoing method embodiments, and implementation principles and technical effects of the embodiments are similar.

FIG. 8 is a schematic structural diagram of Embodiment 2 of user equipment according to an embodiment of this application. As shown in FIG. 8, user equipment 30 provided in this embodiment includes:
a receiving module 31, configured to receive a first message from a network device, where the first message is used for releasing an RRC connection, the first message includes a first indication, and the first indication is used to indicate that a key is to be updated;
a processing module 32, configured to release the RRC connection; and
a sending module 33, configured to initiate access to the network device in response to the first indication to obtain a new security configuration, where the security configuration is used for obtaining a new key.

Optionally, the first indication is a first cause value, the first message includes a release cause information element, and a value of the release cause information element is the first cause value.

Optionally, the sending module 33 is specifically configured to initiate the access to the network device to establish an RRC connection to the network device;
the receiving module 31 is further configured to receive a second message from the network device, where the second message includes the security configuration.

Optionally, the first message further includes indication information used to indicate whether there is downlink data.

Optionally, the sending module 33 is further configured to indicate, to the network device when initiating access to the network device, that an access cause is that the key is to be updated.

Optionally, the first message is an RRC connection release message.

In another specific implementation of the user equipment 30,
a receiving module 31 is configured to receive a first message from a network device, where the first message is used for releasing an RRC connection, and the first message includes a security configuration;
a processing module 32 is configured to release the RRC connection, where
the processing module 32 is further configured to obtain a new key based on the security configuration.

Optionally, the security configuration includes a next hop chaining count NCC value and a security algorithm.

Optionally, the processing module 32 is specifically configured to:
regenerate a base station eNB key KeNB* based on the NCC value and an access security management entity key K_{ASME}; and
generate, based on the eNB key KeNB* and/or the security algorithm, an RRC integrity protection key related to an integrity algorithm.

Optionally, the processing module 32 is further configured to:
generate, based on the eNB key KeNB* and/or the security algorithm, an RRC encryption key and a data encryption key that are related to an encryption algorithm.

Optionally, the first message further includes indication information used to indicate whether there is downlink data.

Optionally, the first message is an RRC connection release message.

Optionally, the user equipment further includes:
a sending module 33, configured to send a connection message to the network device based on the new key.

Optionally, the sending module 33 is further configured to indicate, to the network device in a connection process, that a connection cause is that a key is to be updated.

In another specific implementation of the user equipment 30,
a receiving module 31 is configured to receive a first message that is sent by a network device and that is used in a non-handover condition, where the first message is used for RRC connection reconfiguration, and the first message includes a security configuration;
a processing module 32 is configured to obtain a new key based on the security configuration;
a sending module 33 is configured to send a second message to the network device based on the new key, where the second message is used to indicate that the connection reconfiguration is completed.

Optionally, the security configuration includes a next hop chaining count NCC value and a security algorithm.

Optionally, the processing module 32 is specifically configured to:
regenerate a base station eNB key KeNB* based on the NCC value and an access security management entity key K_{ASME}; and
generate, based on the eNB key KeNB* and/or the security algorithm, an RRC integrity protection key related to an integrity algorithm.

Optionally, the processing module 32 is further configured to:
generate, based on the eNB key KeNB* and/or the security algorithm, an RRC encryption key and a data encryption key that are related to an encryption algorithm.

Optionally, the first message is an RRC connection reconfiguration message, and the second message is an RRC connection reconfiguration complete message.

The user equipment provided in any one of the foregoing implementations is configured to perform the technical solution on a user equipment side according to any one of the foregoing method embodiments, and implementation principles and technical effects of the embodiments are similar.

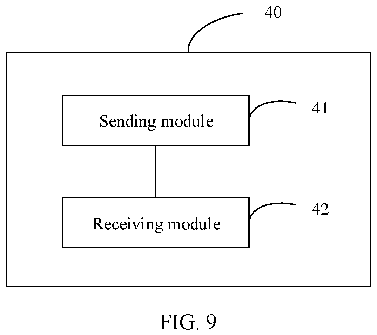

FIG. 9 is a schematic structural diagram of a network device. As shown in FIG. 9, the network device 40 includes:
a sending module 41, configured to send a first message to user equipment UE, where the first message is used for releasing an RRC connection, the first message includes a first indication, and the first indication is used to indicate that a key is to be updated; and
a receiving module 42, configured to accept access initiated by the UE in response to the first indication, to send a security configuration to the UE, where the security configuration is used for obtaining a new key.

Optionally, the first indication is a first cause value, the first message includes a release cause information element, and a value of the release cause information element is the first cause value.

Optionally, the receiving module 42 specifically configured to: receive information that is of the UE and that is used for the access, and establish an RRC connection to the UE;
the sending module 41 is further configured to send a second message to the UE, where the second message includes the security configuration.

Optionally, the first message further includes indication information used to indicate whether there is downlink data.

Optionally, the receiving module 42 is further configured to receive an access cause of the access, where the access cause is that the key is to be updated. Optionally, the first message is an RRC connection release message.

In another specific implementation of the network device 40,
a sending module 41 is configured to send a first message to user equipment UE, where the first message is used for releasing an RRC connection, the first message includes a security configuration, and the security configuration is used for obtaining a new key;
a receiving module 42 is configured to receive a connection message sent by the UE based on the new key.

Optionally, the security configuration includes a next hop chaining count NCC value and/or a security algorithm.

Optionally, the first message further includes indication information used to indicate whether there is downlink data.

Optionally, the receiving module 42 is further configured to receive an indication that the UE indicates, to the network device in a connection process, that an access cause is that a key is to be updated.

Optionally, the first message is an RRC connection release message.

In another specific implementation of the network device 40,
a sending module 41 is configured to send a first message used in a non-handover condition to user equipment UE, where the first message is used for RRC connection reconfiguration, the first message includes a security configuration, and the security configuration is used for obtaining a new key;
a receiving module 42 is configured to receive a second message returned by the UE based on the new key, where the second message is used to indicate that the connection reconfiguration is completed.

Optionally, the security configuration includes a next hop chaining count NCC value and a security algorithm.

Optionally, the first message is an RRC connection reconfiguration message, and the second message is an RRC connection reconfiguration complete message.

The network device provided in any one of the foregoing implementations is configured to perform the technical solution on a network device side according to any one of the foregoing method embodiments, and implementation principles and technical effects of the embodiments are similar.

This application further provides a computer-readable storage medium, where the computer-readable storage medium stores a computer instruction, and the computer instruction enables user equipment to perform the key update method provided in any one of the foregoing implementations.

This application further provides a computer-readable storage medium, where the computer-readable storage medium stores a computer instruction, and the computer instruction enables a network device to perform the key update method provided in any one of the foregoing implementations.

This application further provides a computer program product, where the computer program product includes computer program code, and when the computer program code is run by user equipment, the user equipment is enabled to perform the key update method provided in any one of the foregoing implementations.

This application further provides a computer program product, where the computer program product includes computer program code, and when the computer program code is run by a network device, the network device is enabled to perform the key update method provided in any one of the foregoing implementations.

In a specific implementation of the user equipment or the network device, it should be understood that the processor may be a central processing unit (English: Central Processing Unit, CPU for short), or may be another general purpose processor, a digital signal processor (English: Digital Signal Processor, DSP for short), an application-specific integrated circuit (English: Application Specific Integrated Circuit, ASIC for short), or the like. The general purpose processor may be a microprocessor, or the processor may be any conventional processor or the like. The steps of the method disclosed with reference to the embodiments of this application may be directly performed and completed by a hardware processor, or may be performed and completed by a combination of hardware and software modules in the processor.

All or some of the steps of the foregoing method embodiments may be implemented by using a program by instructing related hardware. The foregoing program may be stored in a readable memory. When the program is executed, the steps in the foregoing method embodiments are performed. The foregoing memory (storage medium) includes: a read-only memory (English: read-only memory, ROM for short), a RAM, a flash memory, a hard disk, a solid-state drive, a magnetic tape (English: magnetic tape), a floppy disk (English: floppy disk), an optical disc (English: optical disc), and any combination thereof.

## Claims

1. A key update method, carried out by a user equipment, UE, wherein the method comprises
receiving (S101) a first message from a network device, wherein the first message is used, by the UE, for releasing a radio resource control RRC connection, the first message comprises a first indication, and the first indication indicates that a key is to be updated;
releasing (S102) the RRC connection; and
in response to the first indication, initiating (S103) access to the network device, to obtain, by the UE, a security configuration, wherein the security configuration is used for obtaining, by the UE, a new key through calculation based on security configuration.

2. The method according to claim 1, wherein the first indication is a first cause value, the first message comprises a release cause information element, and a value of the release cause information element is the first cause value.

3. The method according to claim 1 or 2, wherein the initiating access to the network device to obtain a security configuration comprises:
initiating the access to the network device to establish an RRC connection to the network device; and
receiving a second message from the network device, wherein the second message comprises the security configuration.

4. The method according to any one of claims 1 to 3, wherein the first message further comprises indication information used to indicate whether there is downlink data.

5. The method according to any one of claims 1 to 4, wherein the method further comprises: indicating, to the network device when initiating the access to the network device, that an access cause is that the key is to be updated.

6. The method according to any one of claims 1 to 5, wherein the first message is an RRC connection release message.

7. A key update method, carried out by a communications system comprising a user equipment, UE, and a network device, wherein the method comprises the steps according to any one of claims 1 to 6 carried out by the UE, and further comprises the following steps carried out by the network device:
sending (S101) a first message to the UE, wherein the first message is used for releasing a radio resource control RRC connection, the first message comprises a first indication, and the first indication is used to indicate that a key is to be updated; and
accepting (S103) access initiated by the UE in response to the first indication, to send a security configuration to the UE, wherein the security configuration is used for obtaining a new key.

8. The method according to claim 7, wherein the accepting access initiated by the UE in response to the first indication, to send a security configuration to the UE comprises:
receiving information that is of the UE and that is used for the access, and establishing an RRC connection to the UE; and
sending a second message to the UE, wherein the second message comprises the security configuration.

9. The method according to claim 7 or 8, wherein the method further comprises:
receiving, by the network device, an access cause of the access, wherein the access cause is that the key is to be updated.

10. A communications apparatus, comprising means for carrying out the steps of the method according to any one of claims 1-6.

11. A communications system, comprising a User Equipment and a network device, configured for carrying out the steps of the method according to any one of claims 7-9.

12. A computer-readable storage medium, wherein the computer-readable storage medium stores instructions, and the instructions enable a communications apparatus, when the instructions are executed by the communication apparatus, to perform the key update method according to any one of claims 1 - 6.

## Patentansprüche

1. Schlüsselaktualisierungsverfahren, das von einem Benutzergerät, UE, durchgeführt wird, wobei das Verfahren Folgendes umfasst:
Empfangen (S101) einer ersten Nachricht von einer Netzwerkvorrichtung, wobei die erste Nachricht, durch das UE, zum Freigeben einer Funkressourcensteuerungsverbindung, RRC-Verbindung, verwendet wird, die erste Nachricht eine erste Angabe umfasst und die erste Angabe angibt, dass ein Schlüssel zu aktualisieren ist;
Freigeben (S102) der RRC-Verbindung; und
als Reaktion auf die erste Angabe, Initiieren (S103) eines Zugriffs auf die Netzwerkvorrichtung, um, durch das UE, eine Sicherheitskonfiguration zu erlangen,
wobei die Sicherheitskonfiguration zum Erlangen, durch das UE, eines neues Schlüssels mittels einer Berechnung, die auf der Sicherheitskonfiguration basiert, verwendet wird.

2. Verfahren nach Anspruch 1, wobei die erste Angabe ein erster Ursachenwert ist, die erste Nachricht ein Freigabeursachen-Informationselement umfasst und ein Wert des Freigabeursachen-Informationselements der erste Ursachenwert ist.

3. Verfahren nach Anspruch 1 oder 2, wobei das Initiieren eines Zugriffs auf die Netzwerkvorrichtung, um eine Sicherheitskonfiguration zu erlangen, Folgendes umfasst:
Initiieren des Zugriffs auf die Netzwerkvorrichtung, um eine RRC-Verbindung mit der Netzwerkvorrichtung herzustellen; und
Empfangen einer zweiten Nachricht von der Netzwerkvorrichtung, wobei die zweite Nachricht die Sicherheitskonfiguration umfasst.

4. Verfahren nach einem der Ansprüche 1 bis 3, wobei die erste Nachricht ferner Angabeinformationen umfasst, die dazu verwendet werden, anzugeben, ob es Downlink-Daten gibt.

5. Verfahren nach einem der Ansprüche 1 bis 4, wobei das Verfahren ferner Folgendes umfasst: Angeben, für die Netzwerkvorrichtung beim Initiieren des Zugriffs auf die Netzwerkvorrichtung, dass eine Zugriffsursache darin besteht, dass der Schlüssel zu aktualisieren ist.

6. Verfahren nach einem der Ansprüche 1 bis 5, wobei die erste Nachricht eine RRC-Verbindungsfreigabenachricht ist.

7. Schlüsselaktualisierungsverfahren, das durch ein Kommunikationssystem ausgeführt wird, das ein Benutzergerät, UE, und eine Netzwerkvorrichtung umfasst, wobei das Verfahren die Schritte, die durch das UE nach einem der Ansprüche 1 bis 6 ausgeführt werden, umfasst und ferner die folgenden Schritte umfasst, die durch die Netzwerkvorrichtung ausgeführt werden:
Senden (S101) einer ersten Nachricht an das UE, wobei die erste Nachricht zum Freigeben einer Funkressourcensteuerungsverbindung, RRC-Verbindung, verwendet wird, die erste Nachricht eine erste Angabe umfasst und die erste Angabe verwendet wird, um anzugeben, dass ein Schlüssel zu aktualisieren ist; und
Akzeptieren (S103) eines Zugriffs, der durch das UE als Reaktion auf die erste Angabe initiiert wird, um eine Sicherheitskonfiguration an das UE zu senden, wobei die Sicherheitskonfiguration zum Erlangen eines neuen Schlüssels verwendet wird.

8. Verfahren nach Anspruch 7, wobei das Akzeptieren eines Zugriffs, der durch das UE als Reaktion auf die erste Angabe initiiert wird, um eine Sicherheitskonfiguration an das UE zu senden, Folgendes umfasst:
Empfangen von Informationen, die von dem UE stammen und die für den Zugriff verwendet werden, und Herstellen einer RRC-Verbindung mit dem UE; und
Senden einer zweiten Nachricht an das UE, wobei die zweite Nachricht die Sicherheitskonfiguration umfasst.

9. Verfahren nach Anspruch 7 oder 8, wobei das Verfahren ferner Folgendes umfasst:
Empfangen, durch die Netzwerkvorrichtung, einer Zugriffsursache für den Zugriff, wobei die Zugriffsursache darin besteht, dass der Schlüssel zu aktualisieren ist.

10. Kommunikationseinrichtung, umfassend Mittel zum Ausführen der Schritte des Verfahrens nach einem der Ansprüche 1-6.

11. Kommunikationssystem, umfassend ein Benutzergerät und eine Netzwerkvorrichtung, das dazu konfiguriert ist, die Schritte des Verfahrens nach einem der Ansprüche 7-9 auszuführen.

12. Computerlesbares Speichermedium, wobei das computerlesbare Speichermedium Anweisungen speichert und die Anweisungen eine Kommunikationseinrichtung, wenn die Anweisungen durch die Kommunikationseinrichtung ausgeführt werden, in die Lage versetzen, das Schlüsselaktualisierungsverfahren nach einem der Ansprüche 1-6 durchzuführen.

## Revendications

1. Procédé de mise à jour de clé, mis en œuvre par un équipement utilisateur, UE, dans lequel le procédé comprend :
la réception (S101) d'un premier message provenant d'un dispositif réseau, dans lequel le premier message est utilisé, par l'UE, pour libérer une connexion de commande de ressources radio, RRC, le premier message comprend une première indication, et la première indication indique qu'une clé doit être mise à jour ;
la libération (S102) de la connexion RRC ; et
en réponse à la première indication, l'initiation (S103) de l'accès au dispositif réseau, pour obtenir, par l'UE, une configuration de sécurité,
dans lequel la configuration de sécurité est utilisée pour obtenir, par l'UE, une nouvelle clé par un calcul sur la base de la configuration de sécurité.

2. Procédé selon la revendication 1, dans lequel la première indication est une première valeur de cause, le premier message comprend un élément d'informations de cause de libération, et une valeur de l'élément d'informations de cause de libération est la première valeur de cause.

3. Procédé selon la revendication 1 ou 2, dans lequel l'initiation de l'accès au dispositif réseau pour obtenir une configuration de sécurité comprend :
l'initiation de l'accès au dispositif réseau pour établir une connexion RRC au dispositif réseau ; et
la réception d'un second message provenant du dispositif réseau, dans lequel le second message comprend la configuration de sécurité.

4. Procédé selon l'une quelconque des revendications 1 à 3, dans lequel le premier message comprend également des informations d'indication utilisées pour indiquer s'il existe ou non des données de liaison descendante.

5. Procédé selon l'une quelconque des revendications 1 à 4, dans lequel le procédé comprend également : l'indication, au dispositif réseau lors de l'initiation de l'accès au dispositif réseau, du fait qu'une cause d'accès est le fait que la clé doit être mise à jour.

6. Procédé selon l'une quelconque des revendications 1 à 5, dans lequel le premier message est un message de libération de connexion RRC.

7. Procédé de mise à jour de clé, mis en œuvre par un système de communication comprenant un équipement utilisateur, UE, et un dispositif réseau, dans lequel le procédé comprend les étapes selon l'une quelconque des revendications 1 à 6 mises en œuvre par l'UE, et comprend également les étapes suivantes mises en œuvre par le dispositif réseau :
l'envoi (S101) d'un premier message à l'UE, dans lequel le premier message est utilisé pour libérer une connexion de commande de ressources radio, RRC, le premier message comprend une première indication, et la première indication est utilisée pour indiquer qu'une clé doit être mise à jour ; et
l'acceptation (S103) de l'accès initié par l'UE en réponse à la première indication, pour envoyer une configuration de sécurité à l'UE, dans lequel la configuration de sécurité est utilisée pour obtenir une nouvelle clé.

8. Procédé selon la revendication 7, dans lequel l'acceptation d'accès initiée par l'UE en réponse à la première indication, pour envoyer une configuration de sécurité à l'UE comprend :
la réception d'informations relatives à l'UE et qui sont utilisées pour l'accès, et l'établissement d'une connexion RRC avec l'UE ; et
l'envoi d'un second message à l'UE, dans lequel le second message comprend la configuration de sécurité.

9. Procédé selon la revendication 7 ou 8, dans lequel le procédé comprend également :
la réception, par le dispositif réseau, d'une cause d'accès de l'accès, dans lequel la cause d'accès est le fait que la clé doit être mise à jour.

10. Appareil de communication, comprenant un moyen pour mettre en œuvre les étapes du procédé selon l'une quelconque des revendications 1 à 6.

11. Système de communication, comprenant un équipement utilisateur et un dispositif réseau, configuré pour mettre en œuvre les étapes du procédé selon l'une quelconque des revendications 7 à 9.

12. Support de stockage lisible par ordinateur, dans lequel le support de stockage lisible par ordinateur stocke des instructions, et les instructions permettent à un appareil de communication, lorsque les instructions sont exécutées par l'appareil de communication, de réaliser le procédé de mise à jour de clé selon l'une quelconque des revendications 1 à 6.
